# EUROPEAN PATENT SPECIFICATION

(11) **EP 2 518 801 B1**
(45) Date of publication and mention of the grant of the patent: **19.11.2014**
(21) Application number: 09852471.3
(22) Date of filing: 27.12.2009
(51) Int. Cl.: H01M 4/48, H01M 4/1391, H01M 10/0525, C01D 15/00, C01G 45/00, H01M 4/36, H01M 4/505, H01M 4/525, C01G 51/00, C01G 45/12, C01G 53/00, H01M 4/131

(54) **HIGH MANGANESE POLYCRYSTALLINE CATHODE MATERIAL, PREPARATION METHOD THEREOF AND DYNAMIC LITHIUM ION BATTERY**
HOCH-MANGAN-POLYKRISTALLINES KATHODENMATERIAL, HERSTELLUNGSVERFAHREN DAFÜR UND DYNAMISCHE LITHIUMIONENBATTERIE
MATÉRIAU DE CATHODE POLYCRISTALLIN À HAUTE TENEUR EN MANGANÈSE, PROCÉDÉ DE PRÉPARATION DE CE MATÉRIAU ET BATTERIE AU LITHIUM DYNAMIQUE

(43) Date of publication of application: 31.10.2012
(73) Proprietor: Shenzhen Zhenhua New Material Co., Ltd., Shenzhen, Guangdong 518102 (CN); Guizhou Zhenhua New Material Co., Ltd., Guiyang, Guizhou 550000 (CN)
(72) Inventor: XIANG, Qianxin, Shenzhen Guangdong 518102 (CN); ZHAO, Xiaolian, Shenzhen Guangdong 518102 (CN)
(74) Representative: ProI European Patent Attorneys
(86) International application number: PCT/CN2009/076101
(87) International publication number: WO 2011/075921

(56) References cited:
- EP-A1- 2 023 426
- WO-A1-2006/091019
- WO-A1-2009/063838
- CN-A- 1 288 871
- CN-A- 1 547 277
- CN-A- 1 838 453
- CN-A- 1 847 155
- CN-A- 101 510 603
- CN-A- 101 764 222
- JP-A- 8 037 007
- JP-A- 2006 260 906
- US-A1- 2009 127 520
- US-A1- 2009 233 176

## Description

### Background of the Present Invention

### Field of Invention

The present invention relates to a positive-electrode material, preparing method thereof, and a lithium ion power battery, and more particularly to a high manganese polycrystalline positive-electrode material, preparing method thereof, and a lithium ion power battery prepared from the high manganese polycrystalline positive-electrode material.

### Description of Related Arts

Recently, the lithium ion power battery technology has developed very fast. Accordingly, the performance, cost and security of the power battery play a significant role in the advancement of the electric automobile technology. In addition, power battery is indispensable for wind power, nuclear power, solar power, peak load regulation and new energy automobile, so that a breakthrough thereof will bring a new spring to the whole new energy industry chain, and the power battery will then be an energy storing tool for all kinds of new energy source and take place of fuel to become a main supply facility of mobile energy. Electric bicycle, as a novel energy-save and convenient transportation tool, has gradually been accepted by consumers, a number of the consumed population of the electric bicycles has amounted to 200, 000, 000 in 2007 in China, and we are glad to see that the electric automobile industry in China is gaining momentum. But a lot of problems still remain to be solved, for example, two most concerned issues are the security and environment pollution. Currently, the most widely used power battery in an electric automobile is still lead-acid battery in China domestic market, but disadvantages such as a relatively low energy density and high pollution have gradually been acknowledged. Therefore, to find a novel replaceable product has become a hot topic in the power battery field and even a challenge for the whole world. The Ni-H battery technology has been developed relatively mature, the cost is relatively low and the battery does not pollute the environment. But a fetal disadvantage, which is the memory effect, has brought a lot of inconvenience for the use of the Ni-H battery. In addition, existence of other disadvantages such as a high self-discharge rate and a low specific energy makes the Ni-H battery only be a transitional product. The lithium ion battery has gradually taken place of Ni-H battery in energy storing facilities because of its high energy density and other following advantages: 1) a high working voltage of the lithium ion battery, which is above 3.6V, is three times larger than the Cd-Ni and Ni-H battery; 2) a small size, which is 30% smaller than the Ni-H battery; 3) a low weight, which is 50% smaller than the Ni-H battery; 4) a high specific energy, which is 120 - - 150wh/kg, is 2 - 3 times larger than the Cd-Ni battery and 1 - 2 times larger than the Ni-H battery; and 5) no memory effect.

Lithium colbalt oxide, which is the earliest mature positive-electrode material in industry, has advantages such as a high energy density and a good cycle performance. But its application in power battery is still limited because of high cost and worrying security performance. Co-Ni-Mn ternary positive-electrode material also has advantages such as a high energy density and a good cycle performance. But its application in power battery is also limited by the bottle neck of high cost and worrying security performance. Currently, the study of positive-electrode material of power battery has been focused mainly on lithium iron phosphate and lithium manganate. Lithium manganate enjoys benefits of low cost and good security performance, but a cycle performance at a relatively high temperature is bad, and a high self-discharge rate is also a critical drawback. Although the performance can be modified by doping with Co, Ni, Mg and Al, it still cannot be used alone in power battery in view of the cost. Lithium iron phosphate is safe as a positive-electrode material, but an atmosphere of a preparing procedure thereof is hard to control, resulting in a low uniform rate and low energy density of the product, and the cost fact also calls a further development of the lithium iron phosphate technology if it is going to be widely used in power battery. Therefore, development of a positive-electrode material which has a relatively low cost, high security and a long life span really makes senses to the development of the power battery and electric automobile in the future.
Conventional battery technologies are known from EP 2 023 426 A1, US 2009/233176 A1, WO 2006/091019A1, JP 2006 260906 A, US 2009/127520 A1, and WO 2009/063838 A1.

### Summary of the Present Invention

It is desired to provide a high manganese polycrystalline positive-electrode material, preparing method thereof, and a lithium ion power battery prepared from the high manganese polycrystalline positive-electrode material, wherein the power battery has a high energy density and good cycle performance at a high temperature.

Additional advantages and features of the above will become apparent from the description which follows, and may be realized by means of the instrumentalities and combinations particular point out in the appended claims.

The present disclosure discusses a high manganese polycrystalline positive-electrode material of the formula: Li_{w}Mnₓ(CoNi)_{y}O_{z}, wherein x=0.4-2.0, y=0.1-0.6, x+y<2, z≥2, W≥1, wherein weight of Mn is at least 40% weight of Li_{w}Mnₓ(CoNi)_{y}O_{z}, particle size thereof is 7 - 20µm, wherein the high manganese polycrystalline positive-electrode material is consisted of at least two crystal lattice structures which are selected from the group consisting of LiMn₂O₄, LiCoₙ (NiMn) ₁₋ₙO₂, LiNi_{0.8} Co_{0.2}O₂, LiCoO₂, LiNiₙMn₁₋ₙO₂, LiMn₂ₙNi₂₍₁₋ₙ₎O₄ and LiNiO₂, wherein n<1, and the crystal lattice structures are in an intergrown or mixed state.

A mole percentage of Mn is 60 - 90% of Co, Ni plus Mn.

A doping element in lattice of the crystal lattice structures is selected from at least one of the group consisting of Al, Si, Ti, Fe, Zr, Mg and Cr, wherein a doping amount is 0.01 - 0.1mol/mol Li_{w}Mnₓ(CoNi)_{y}O_{z}.

In accordance with anaspect of the invention, the present invention provides a method according to the appended independent method claim, which is directed to a method of preparing a high manganese polycrystalline positive-electrode material, comprising the following steps.

1) preparing of a precursor: disperse of 0.3-1.2 mol Li₂CO₃, LiAc or LiOH in 200-300ml 2-5 wt % polyethylene glycol hydrophilic colloid solution, stir at a speed of 10-60rpm for 50-120min to obtain a colloid product, add compound of Co, Ni and Mn thereto with a mol ratio of Mn to Ni plus Co is 0.4-2.0: 0.01-0.6, stir at a speed of 50-60rpm for 10-30min, dry at 150-600 °C for 2-15 hours, and stir at a speed 1500-3000rpm for 2-30min to obtain the precursor of crystalline of Li with Co, Ni and Mn.

2) sintering of a monocrystalline: sinter the precursor at 750-1000°C for 4-15 hours, cooling, and cutting a particle size thereof to D50=7∼20µm so as to obtain the monocrystalline compound which is LiMn₂O₄, LiCon (NiMn)₁₋ₙO₂, LiNi_{0.8} Co_{0.2}O2, LiCoO₂, LiNiₙMn₁₋ₙO₂, LiMn₂ₙNi₂₍₁₋ₙ₎ O₄ or LiNiO₂, wherein n ≤ 1.

3) synthesizing of polycrystalline: mix at least two of the monocrystalline compounds at a mol ratio of Mn to Co plus Ni plus Mn is 60-90:100, stir at a speed of 100-150rpm for 5-20min to obtain a mixture, wherein 0.01-0.1mol soluble salt of a doping element selected from at least one of the group consisting of Al, Si, Ti, Fe, Zr, Mg and Cr dissolved in 100-300ml 30-60 wt % ethanol aqueous solution is added to said mixture, stir at a speed of 60-100 rpm for 30-60min, dry at 100-200°C for 2-10 hours, heat with a heating rate of 50-100°C/hr until a temperature thereof amounts to 300-850°C, and activate for 2-10 hours, so that crystal lattice structures are in an intergrown or mixed state.

Preferably, in the method of the present invention, the crystal lattice structures in the symbiotic phase are subjected to a smashing process.

Preferably, in the method of the present invention, crystal lattice structures in an intergrown or mixed state are grinded at a rotating speed of 1500-3000rpm for 2-5 min.

The Compound of Co, Ni and Mn in the method of the present invention is selected from the group consisting of monohydroxy compound, oxalate and carbonate of the three elements.

Preferably, in the step 2), the precursor is sintered at 750-1000 °C for 4-15 hours and then naturally cooled down.

The present disclosure further discusses a lithium ion power battery having a positive electrode, wherein current collector of the positive electrode is coated with active positive-electrode material, wherein a formula of the active positive-electrode material is Li_{w}Mnₓ(CoNi)_{y}O_{z}, wherein x=0.4-2.0, y=0.1-0.6, x+y<2, z≥2, W≥1, weight of Mn ≥ 40% weight of Li_{w}Mnₓ(CoNi)_{y}O_{z}, particle size of 7 - 20µm, wherein the high manganese polycrystalline positive-electrode material comprises at least two crystal lattice structures which are selected from the group consisting of LiMn₂O₄, LiCoₙ (NiMn)₁₋ₙO₂, LiNi_{0.8} Co_{0.2}O₂, LiCoO₂, LiNiₙMn₁₋ₙO₂, LiMn₂ₙNi₂₍₁₋ₙ₎O₄ and LiNiO₂, wherein n<1, and the crystal lattice structures are in an intergrown or mixed state

The positive-electrode material of the battery as mentioned above is prepared by the following steps: mix Li_{w}Mnₓ(CoNi)_{y}O_{z}, electric conductive carbon black which is 2.0-3.0% weight of the positive-electrode material, and binder PVDF which is 2.0-2.5% weight of the positive-electrode material to obtain a resulting mixture, add n-methyl pyrrolidone thereto with a ratio of the resulting mixture to n-methyl pyrrolidone is 1:0.9 by weight, after uniformly stirring to obtain a broth, coat the broth onto the aluminum foil current collector, dry and compress to obtain the positive-electrode material pole piece.

In comparison with the prior art, the high manganese polycrystalline positive-electrode material of the present invention has several advantages, a specific energy thereof is above 155Wh/Kg, a circulation capacity thereof is maintained above 80% after 500 cycles of charge and discharge at 55 °C, a circulation life span thereof at 25 °C is not less than 1 000 times, the capacity is always above 80% and is capable of being used in a high voltage system, a charging voltage is not less than 4.3V, a good processability is provided, the positive-electrode material pole piece is not easy to slip off, and a weight of the positive-electrode material is relatively lighter which is a quarter or a fifth of a lead-acid battery under a condition that the lead-acid battery has a same amount of energy with the positive-electrode material of the present invention. Accordingly, the power battery prepared from the positive-electrode material of the present invention can be used in power system of electric bicycle, electric automobile, and energy storing system of wind power, nuclear power, solar power, peak load regulation and the like.

Still further objects and advantages will become apparent from a consideration of the ensuing description and drawings.

These and other objectives, features, and advantages of the present invention will become apparent from the following detailed description, the accompanying drawings, and the appended claims.

### Brief Description of the Drawings

Fig. 1 is an x ray diffraction pattern of a sample provided by example 1 of the present invention.
Fig. 2 is a scanning electron micrograph of a sample provided by example 1 of the present invention.
Fig. 3 is an x ray diffraction pattern of a sample provided by example 2 of the present invention.
Fig. 4 is a scanning electron micrograph of a sample provided by example 2 of the present invention.
Fig. 5 is an x ray diffraction pattern of a sample provided by example 3 of the present invention.
Fig. 6 is a scanning electron micrograph of a sample provided by example 3 of the present invention.
Fig. 7 is an x ray diffraction pattern of a sample provided by example 4 of the present invention.
Fig. 8 is a scanning electron micrograph of a sample provided by example 4 of the present invention.
Fig. 9 is an x ray diffraction pattern of a sample provided by example 5 of the present invention.
Fig. 10 is a scanning electron micrograph of a sample provided by example 5 of the present invention.
Fig. 11 is an x ray diffraction pattern of a sample provided by example 6 of the present invention.
Fig. 12 is a scanning electron micrograph of a sample provided by example 6 of the present invention.
Fig. 13 is an x ray diffraction pattern of a sample provided by example 7 of the present invention.
Fig. 14 is a scanning electron micrograph of a sample provided by example 7 of the present invention.
Fig. 15 is an x ray diffraction pattern of a sample provided by example 8 of the present invention.
Fig. 16 is a scanning electron micrograph of a sample provided by example 8 of the present invention.
Fig. 17 is an x ray diffraction pattern of a sample provided by example 9 of the present invention.
Fig. 18 is a scanning electron micrograph of a sample provided by example 9 of the present invention.
Fig. 19 is an x ray diffraction pattern of a positive-electrode material of a first control example.
Fig. 20 is a scanning electron micrograph of the positive-electrode material of the above first control example.
Fig. 21 is an x ray diffraction pattern of a positive-electrode material of a second control example.
Fig. 22 is a scanning electron micrograph of the positive-electrode material of the above second control example.

### Detailed Description of the Preferred Embodiment

According to a preferred embodiment of the present invention, a formula of a high manganese polycrystalline positive-electrode material is Li_{w}Mnₓ(CoNi)_{y}O_{z}, wherein x=0.4-2.0, y=0.1-0.6, x+y<2, z≥2, W≥1. A doping element in lattice of the crystal lattice structures is selected from at least one of the group consisting of Al, Si, Ti, Fe, Zr, Mg and Cr, wherein a doping amount is 0.01 - 0.1mol/mol Li_{w}Mnₓ(CoNi)_{y}O_{z}, wherein a weight of Mn is not less than 40% weight of Li_{w}Mnₓ(CoNi)_{y}O_{z}, a particle size thereof is 7 - 20µm. The high manganese polycrystalline positive-electrode material is consisted of at least two crystal lattice structures which are selected from the group consisting of LiMn₂O₄, LiCoₙ (NiMn)₁₋ₙO₂, LiNi_{0.8} Co_{0.2}O₂, LiCoO₂, LiNiₙMn₁₋ₙO₂, LiMn₂ₙNi₂₍₁₋ₙ)O₄ and LiNiO₂, wherein n<1, and the crystal lattice structures are in an intergrown or mixed state, a compact density thereof is 3.0-3.5g/cm³.

The present invention also provides a method of preparing a high manganese polycrystalline positive-electrode material, the method comprises the following steps.

1) Preparing of a precursor: disperse of 0.3-1.2 mol Li₂CO₃, LiAc or LiOH in 200-300ml 2-5 wt % polyethylene glycol hydrophilic colloid solution, stir at a speed of 10-60rpm for 50-120min to obtain a colloid product, add compound of Co, Ni and Mn thereto with a mol ratio of Mn to Ni plus Co is 0.4-2.0: 0.01-0.6, stir at a speed of 50-60rpm for 10-30min, dry at 150-600 °C for 2-15 hours, and stir at a speed 1500-3000rpm for 2-30min to obtain the precursor of crystalline of Li with Co, Ni and Mn. The compound of Co, Ni and Mn in the method of the present invention is selected from the group consisting of monohydroxy compound, oxalate and carbonate of the three elements.

2) Sintering of a monocrystalline: sintering the precursor at 750-1000°C for 4-15 hours, cooling, and cutting a particle size thereof to D50=7∼20µm so as to obtain the monocrystalline compound which is LiMn₂O₄, LiCon (NiMn) ₁₋ₙO₂, LiNi_{0.8} Co_{0.2}O2, LiCoO₂, LiNiₙMn₁₋ₙO₂, LiMn₂ₙNi₂₍₁₋ₙ₎O₄ or LiNiO₂, wherein n < 1.

3) Synthesizing of polycrystalline: mix at least two of the monocrystalline compounds at a mol ratio of Mn to Co plus Ni plus Mn is 60-90:100, stir at a speed of 100-150rpm for 5-20min to obtain a mixture, wherein 0.01-0.1mol soluble salt of a doping element selected from at least one of the group consisting of Al, Si, Ti, Fe, Zr, Mg and Cr dissolved in 100-300ml 30-60 wt % ethanol aqueous solution is added to the mixture, stir at a speed of 60-100 rpm for 30-60min, dry at 100-200°C for 2-10 hours to finish the doping process, heat with a heating rate of 50-100°C/hr until a temperature thereof amounts to 300-850°C, and activating for 2-10 hours, so that crystal lattice structures are in an intergrown or mixed state. The crystal lattice structures in an intergrown or mixed state are grinded at a rotating speed of 1500-3000rpm for 2-5min to obtain the high manganese polycrystalline positive-electrode material. A formula of the high manganese polycrystalline positive-electrode material is Li_{w}Mnₓ(CoNi)_{y}O_{z}, wherein x=0.5-1.9, y=0.1-0.6, x+y<2, z≥2, W≥1, weight of Mn ≥ 40% weight of Li_{w}Mnₓ(CoNi)_{y}O_{z}, particle size of 7 - 20µm, wherein the high manganese polycrystalline positive-electrode material is consisted of at least two crystal lattice structures which are selected from the group consisting of LiMn₂O₄, LiCoₙ (NiMn)₁₋ₙO₂, LiNi_{0.8} Co_{0.2}O₂, LiCoO₂, LiNiₙMn₁₋ₙO₂, LiMn₂ₙNi₂₍₁₋ₙ₎O₄ and LiNiO₂, wherein n<1, and the crystal lattice structures are in an intergrown or mixed state, a compact density thereof is 3.0-3.5g/cm³.

The drying device of the present invention is a KSF1100-V oven-type furnace of Yixing Qianjing Furnace Device Co., Ltd. The stirring device is a JJ experimental homogenizer of Langfang Shengtong Machinery Co., Ltd. The grinding device is a SHQM two-planet type grinder of Lianyuangang Chunlong Petroleum Instrument Co., Ltd. The grading equipment is a TY-200A analyzing standard grading sieve of Xinxiang Tongyi Machinery Co., Ltd. The high manganese polycrystalline positive-electrode material of the present invention is tested and analyzed with a JSM6360 scanning electron microscope of Japan Electronic Co., Ltd, a D/max-2200pc x-ray diffractometer of Japan Rigaku Co., Ltd, a LS602 laser particle size analyzer of Zhuhai Omec Co., Ltd, a FZS4-4B densitometer and a Pioneer 2002 areameter of Beijing Iron&Steel Research Institute.

The lithium ion power battery of the present invention is consisted of positive electrode, negative electrode, non-aqueous electrolytic solution, separator, and a container. The positive pole is consisted of positive current collector and active positive-electrode material coated on the positive current collector, wherein a formula of the active positive-electrode material is Li_{w}Mnₓ(CoNi)_{y}O_{z}, wherein x=0.5-1.9, y=0.1-0.6, x+y<2, z≥2, W≥1, a doping element in lattice of the crystal lattice structures is selected from at least one of the group consisting of Al, Si, Ti, Fe, Zr, Mg and Cr, wherein a doping amount is 0.01 - 0.1mol/mol Li_{w}Mnₓ(CoNi)_{y}O_{z.}, weight of Mn is not less than 40% weight of Li_{w}Mnₓ(CoNi)_{y}O_{z}, a mole percentage of Mn is 60 - 90% of Co, Ni plus Mn, a particle size thereof is 7 - 20µm, wherein the high manganese polycrystalline positive-electrode material comprises at least two crystal lattice structures which are selected from the group consisting of LiMn₂O₄, LiCoₙ (NiMn)₁₋ₙO₂, LiNi_{0.8} Co_{0.2}O₂, LiCoO₂, LiNiₙMn₁₋ₙO₂, LiMn₂ₙNi₂₍₁₋ₙ₎O₄ and LiNiO₂, wherein n<1, and the crystal lattice structures are in an intergrown or mixed state. A scanning electron micrograph suggests that the crystal lattice structures of the positive-electrode material is in a mixed state, a characteristic peak of an x ray diffractrometer teaches a existence of the crystal lattice structures in an intergrown state. The compact density thereof is 3.0-3.5g/cm³, an initial capacity of charging and discharging 1C at 4.2-2.75V is at least 115mAh/g, an energy density of the positive electrode is at least 345mAh/ cm³ (the energy density of the positive electrode mAh/ cm³= the compact density of the positive electrode g/cm³ × the initial capacity mAh/g), an circulation capacity retention of charging and discharging 1C at 55 °C is at least 80%, an over load charge of 1C at 10V does not result in an explosion nor a burning, a circulation life span at 25 °C is at least 1 000 times, a capacity is maintained at least 80%, a capacity of charging 1C with a charging voltage of 4.3V is at least 135mAh/g, a capacity of charging 1C with a charging voltage of 4.4V is at least 140mAh/g, the processability is good and the positive-electrode material pole piece is not easy to slip off.

The negative electrode is consisted of negative current collector and active negative-electrode material coated on the negative current collector, the separator is just a solid insulation layer or conductive solid matter, so that the positive electrode is separated from the negative electrode. The container is used for receiving the positive electrode, the negative electrode, the separator, and the electrolytic solution.

The positive-electrode material of the battery of the present invention is prepared by the following steps: mix Li_{w}Mnₓ(CoNi)_{y}O_{z}, electric conductive carbon black which is 2.0-3.0% weight of the positive-electrode material, and binder PVDF which is 2.0-2.5% weight of the positive-electrode material to obtain a resulting mixture, add n-methyl pyrrolidone thereto with a ratio of the resulting mixture to n-methyl pyrrolidone is 1:0.9 by weight, after uniformly stirring to obtain a broth, coat the broth onto the aluminum foil current collector, dry and compressing to obtain the positive-electrode material pole piece. The negative-electrode material is prepared by the following steps: mix active negative electrode material which is mesocarbon microbeads, conductive agent S-P which is 2% weight of the negarive-electrode material, and binder PVDF which is 2.0-2.5% weight of the negative-electrode material to obtain a resulting mixture, add n-methyl pyrrolidone thereto with a ratio of the resulting mixture to n-methyl pyrrolidone is 1:1 by weight, after uniformly stirring to obtain a broth, coat the broth onto the copper foil current collector, dry and compress to obtain the negative-electrode material pole piece. The separator is made of PPPE complex material, the container comprises an aluminum casing with an insulation layer and a battery lid with lead guiding holes. The compressed positive-electrode material pole piece and the negative-electrode material pole piece is welded with leads, and then the separator is inserted therebetween, after winding on a up-coiler, the resulting assembly is put into the aluminum casing, then the leads are guided out of the battery lid, and then the lead guiding holes are sealed by glue. The battery lid and the aluminum casing are sealedly welded together. The electrolytic solution is injected thereinto in an environment with a moisture lower than 1.5%, the electrolytic solution is a mixture of EC, DEC, and DMC with a mass ratio of 1:1:1, the electrolyte is 1M lithium hexafluorophosphate, and the container is immediately sealed after the injection process, a battery type is square 053084.

The charging and discharging test of the lithium ion power battery is carried out according to the testing method of GB/T18287-2000, the testing device is a BS-9360 battery testing cabinet of Guangzhou Qingtian Co., Ltd.

### 1) Preparing of a precursor and sintering of a monocrystalline.

### Example 1

Lithium carbonate solution containing 0.3 mol Li was dispersed in 300ml 2 wt %, polyethylene glycol hydrophilic colloid solution, stirring at a speed of 50rpm for 10min to obtain a colloid product, nickel carbonate with 0.1mol Ni and manganese carbonate with 0.8 mol Mn were added thereto, stirring at a speed of 60rpm for 10min, drying at 150 °C for 10 hours, and stirring at a speed 3000rpm for 2min to yield a precursor 1 of crystalline of Li with Ni and Mn.

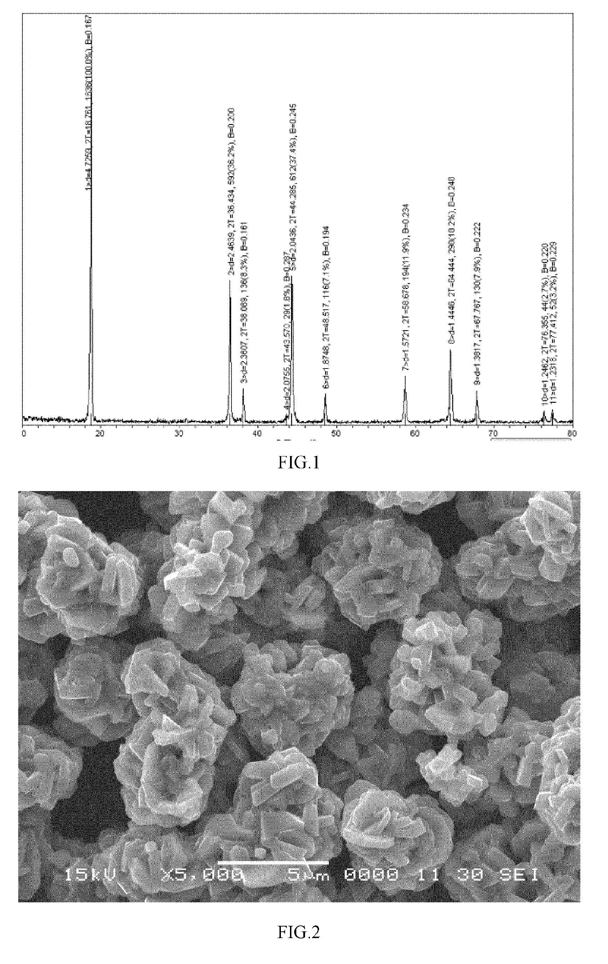

The precursor 1 was sintered at 850°C for 7 hours, after natural cooling, and cutting a particle size thereof to D50=12µm so as to obtain the monocrystalline compound which wss LiMn₂ₙNi₂₍₁₋ₙ₎O₄, wherein n< 1, so that a monocrystalline A was yielded. An x ray diffraction pattern showed that the monocrystalline A was of a spinel structure, as shown in Fig. 1. A scanning electron micrograph suggested that the monocrystalline A is of a single crystalline composition, as shown in Fig. 2.

### Example 2

Lithium hydroxide solution containing 1 mol Li was dispersed in 300ml 5 wt % polyethylene glycol hydrophilic colloid solution, stirring at a speed of 60rpm for 70min to obtain a colloid product, cobalt oxalate with 0.1mol Co , nickel oxalate with 0.45 mol Ni and manganese oxalate with 0.45mol Mn were added thereto, stirring at a speed of 50rpm for 10min, drying at 450 °C for 10 hours, and stirring at a speed 3000rpm for 2min to yield a precursor 2 of crystalline of Li with Ni , Co and Mn.

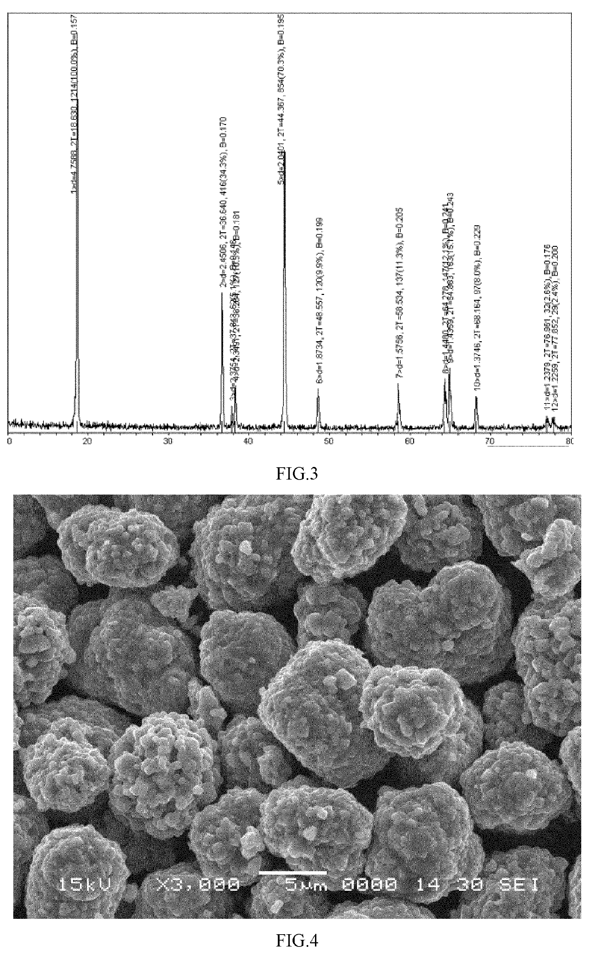

The precursor 2 was sintered at 920 °C for 10 hours, after natural cooling to a room temperature, and cutting a particle size thereof to D50=18µm so as to obtain the monocrystalline compound which was LiCoₙ(NiMn)₁₋ₙO₂, wherein n < 1, so that a monocrystalline B was yielded. An x ray diffraction pattern showed that the monocrystalline B was of a layered structure, as shown in Fig. 3. A scanning electron micrograph suggested that the monocrystalline B was of a single crystalline composition, as shown in Fig. 4.

### Example 3

Lithium carbonate solution containing 0.3 mol Li was dispersed in 200ml 4 wt % polyethylene glycol hydrophilic colloid solution, stirring at a speed of 50rpm for 120min to obtain a colloid product, nickel carbonate with 0.06 mol Ni, and manganese carbonate with 1.0 mol Mn were added thereto, stirring at a speed of 50rpm for 20min, drying at 250 °C for 10 hours, and stirring at a speed 2000rpm for 15min to yield a precursor 3 of crystalline of Li with Ni and Mn

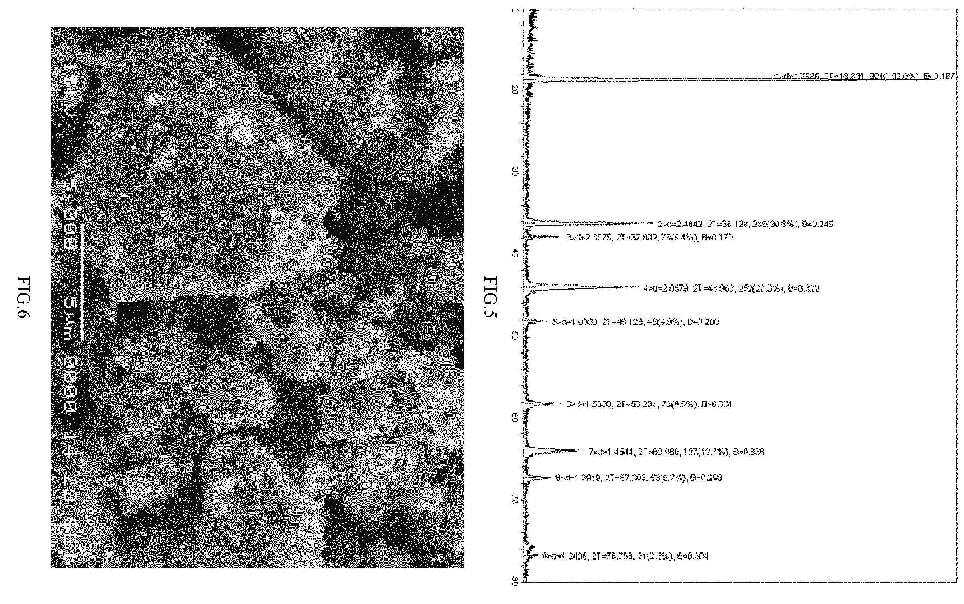

The precursor 3 was sintered at 750°C for 15 hours, after natural cooling to a room temperature, and cutting a particle size thereof to D50=8µm so as to obtain the monocrystalline compound which was LiMn₂ₙNi₂₍₁₋ₙ₎O₄, wherein n < 1, so that a monocrystalline C was yielded. An x ray diffraction pattern showed that the monocrystalline C was of a spinel structure, as shown in Fig. 5. A scanning electron micrograph suggested that the monocrystalline C was of a single crystalline composition, as shown in Fig. 6.

### Example 4

Lithium carbonate solution containing 0.6 mol Li was dispersed in 250ml 3 wt % polyethylene glycol hydrophilic colloid solution, stirring at a speed of 55rpm for 100min to obtain a colloid product, nickel carbonate with 0.6 mol Ni, and manganese carbonate with 0.4 mol Mn were added thereto, stirring at a speed of 55rpm for 10min, drying at 600°C for 2 hours, and stirring at a speed 1500rpm for 30min to yield a precursor 4 of crystalline of Li with Ni and Mn.

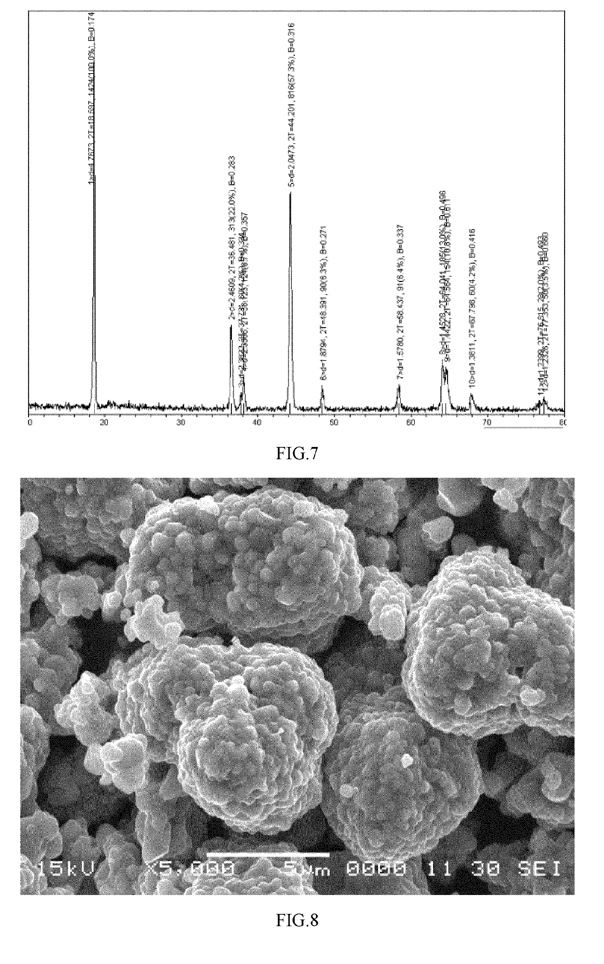

The precursor 4 was sintered at 1000 °C for 4 hours, after natural cooling to a room temperature, and cutting a particle size thereof to D50=16µm so as to obtain the monocrystalline compound which was LiNiₙMn₁₋ₙO₂, wherein n < 1, so that a monocrystalline D was yielded. An x ray diffraction pattern showed that the monocrystalline D was of a layered structure, as shown in Fig. 7. A scanning electron micrograph suggested that the monocrystalline D was of a single crystalline composition, as shown in Fig. 8.

### Example 5

Lithium carbonate solution containing 1.2 mol Li was dispersed in 200ml 4 wt % polyethylene glycol hydrophilic colloid solution, stirring at a speed of 50rpm for 90min to obtain a colloid product, nickel carbonate with 0.01 mol Ni, and manganese carbonate with 2.0 mol Mn were added thereto, stirring at a speed of 50rpm for 30min, drying at 150 °C for 15 hours, and stirring at a speed 2000rpm for 15min to yield a precursor 5 of crystalline of Li with Ni and Mn.

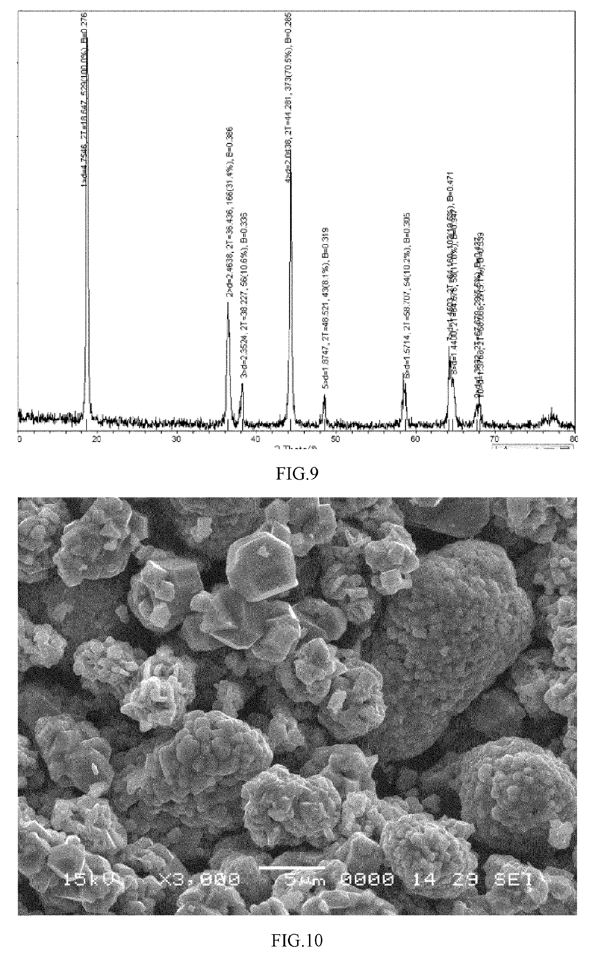

The precursor 5 was sintered at 800 °C for 15 hours, after natural cooling to a room temperature, and cutting a particle size thereof to D50=8µm so as to obtain the monocrystalline compound which was LiMn₂Ni₂₍₁₋ₙ₎O₄, wherein n < 1, so that a monocrystalline E was yielded. An x ray diffraction pattern showed that the monocrystalline E was of a spinel structure, as shown in Fig. 9. A scanning electron micrograph suggested that the monocrystalline E was of a single crystalline composition, as shown in Fig. 10.

### 2) Synthesizing of polycrystalline,

### Example 6

Monocrystalline A and monocrystalline B at a mol ratio of Mn to Co plus Ni plus Mn was 73.7:100 were mixed and stirred at a speed of 100rpm for 20min to obtain a mixture, aluminum acetate containing 0.01mol Al which was dissolved in 100ml 50 wt % ethanol aqueous solution was then added to the mixture, stirring at a speed of 100 rpm for 30min, drying at 100 °C for 10 hours, heating with a heating rate of 100°C/hr until a temperature thereof amounted to 850°C, and activating for 2 hours, so that crystal lattice structures were in an intergrown or mixed state. The crystal lattice structures in an intergrown or mixed state were grinded at a rotating speed of 1500rpm for 5min to yield the high manganese positive-electrode material. Referring to Fig. 9 of the drawing, an x ray diffraction pattern showed that the crystal lattice structures were intergrown LiMn₂ₙNi₂₍₁₋ₙ₎O₄/ LiCoₙ(NiMn)₁₋ₙO₂, an ionic radius of Al³⁺ was 0.0535nm and was smaller than an ionic radius of Li¹⁺ which was 0.076nm, so that part of the Li⁺ was replaced in a dynamic condition. And thus the Li¹⁺ of the monocrystallines and other crystalline in different phases were further dispersed. The characteristic peaks of the x ray diffraction pattern showed that the crystalline structure was different from a simple mixed polycrystalline, the characteristic peak 003 and the characteristic peak 111 were substantially overlapped, indicating that the crystal lattice structures are in an intergrown state. Referring to Fig. 10 of the drawing, the scanning electron micrograph suggested an existence of different crystal lattice structures instead of a single monocrystalline.

The high manganese polycrystalline material of example 6 was used as an active positive-electrode material to prepare a 053048 square type lithium ion battery, the performance and electric property of the positive-electrode material pole piece was shown in Table 1.

### Example 7

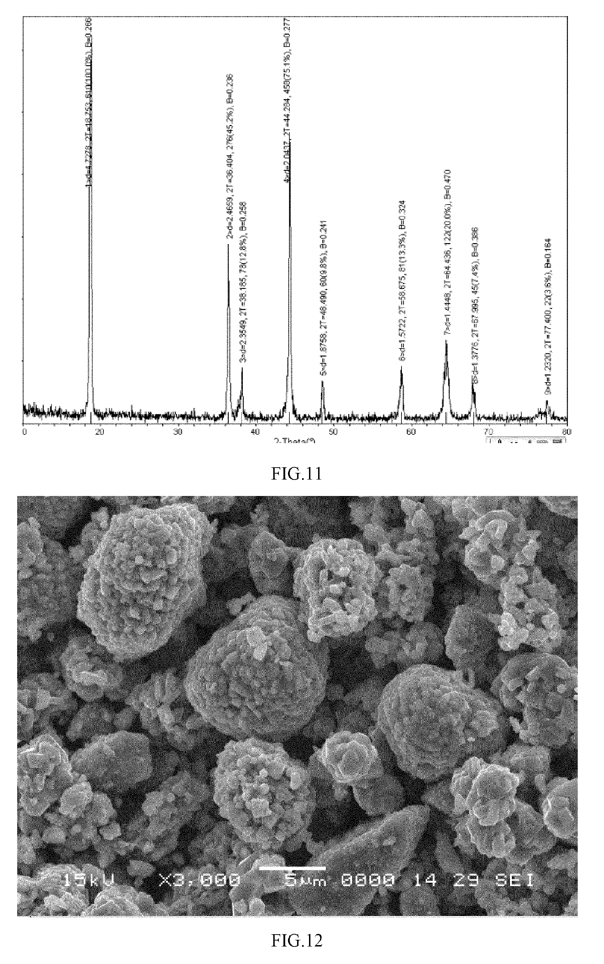

Monocrystalline A, monocrystalline B and monocrystalline C at a mol ratio of Mn to Co plus Ni plus Mn was 69.4:100 were mixed and stirred at a speed of 150rpm for 5min to obtain a mixture, magnesium acetate containing 0.1mol Mg which was dissolved in 100mol 30 wt % ethanol aqueous solution was then added to the mixture, stirring at a speed of 60 rpm for 60min, drying at 200°C for 2 hours, heating with a heating rate of 50°C/hr until a temperature thereof amounted to 650°C, and activating for 5 hours, so that crystal lattice structures were in an intergrown or mixed state. The crystal lattice structures in an intergrown or mixed state were grinded at a rotating speed of 3000rpm for 2min to yield the high manganese positive-electrode material. Referring to Fig. 11 of the drawing, an x ray diffraction pattern showed that the crystal lattice structures were intergrown LiMn₂ₙNi₂₍₁₋ₙ₎O₄/ LiCoₙ(NiMn)₁₋ₙO₂/ LiMn₂ₙNi₂₍₁₋ₙ₎O₄, an ionic radius of Mg²⁺ was 0.072nm and was smaller than an ionic radius of Li¹⁺ which was 0.076nm, so that part of the Li¹⁺ was replaced in a dynamic condition. And thus the Li¹⁺ of the monocrystallines and other crystalline in different phases were further dispersed. The characteristic peaks of the x ray diffraction pattern showed that the crystalline structure was different from a simple mixed polycrystalline, the characteristic peak 003 and the characteristic peak 111 were substantially overlapped, indicating that the crystal lattice structures are in an intergrown state. Referring to Fig. 12 of the drawing, the scanning electron micrograph suggested an existence of different crystal lattice structures instead of a single monocrystalline.

The high manganese polycrystalline material of example 7 was used as an active positive-electrode material to prepare a 053048 square type lithium ion battery, the performance and electric property of the positive-electrode material pole piece was shown in Table 1.

### Example 8

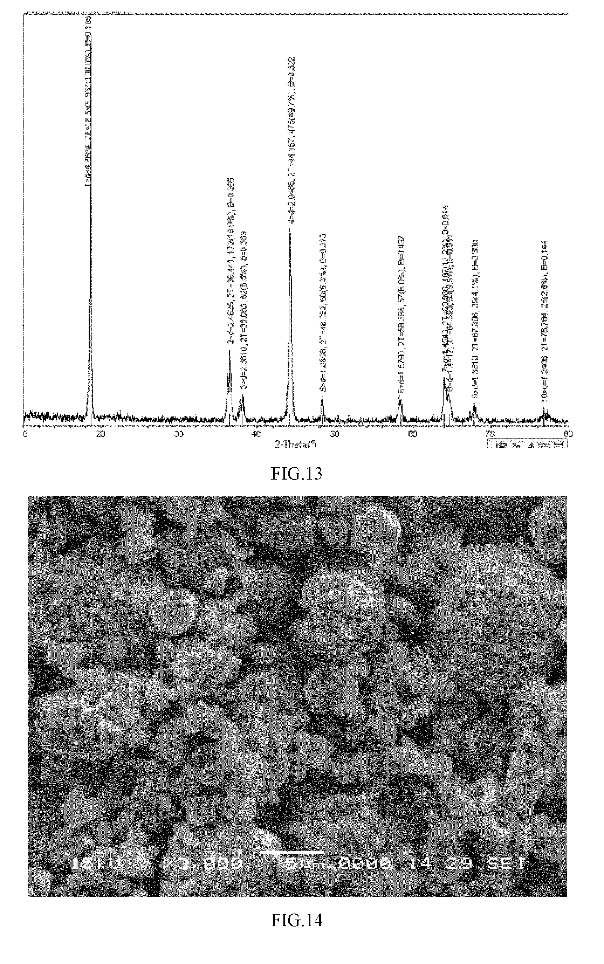

Monocrystalline C and monocrystalline D at a mol ratio of Mn to Co plus Ni plus Mn was 60.3:100 were mixed and stirred at a speed of 120rpm for 10min to obtain a mixture, aluminum acetate containing 0.01 mol Al which was dissolved in 300ml 60 wt % ethanol aqueous solution was then added to the mixture, stirring at a speed of 70 rpm for 40min, drying at 110°Cfor 10 hours, heating with a heating rate of 70°C/hr until a temperature thereof amounted to 300°C, and activating for 7 hours, so that crystal lattice structures were in an intergrown or mixed state. The crystal lattice structures in an intergrown or mixed state were grinded at a rotating speed of 2000rpm for 3min to yield the high manganese positive-electrode material. Referring to Fig. 13 of the drawing, an x ray diffraction pattern showed that the crystal lattice structures were intergrown LiMn₂ₙNi₂₍₁₋ₙ₎O₄/LiNiₙMn₁₋ₙO₂, an ionic radius of Al³⁺ was 0.0535nm and was smaller than an ionic radius of Li¹⁺ which was 0.076nm, so that part of the Li¹⁺ was replaced in a dynamic condition. And thus the Li¹⁺ of the monocrystallines and other crystalline in different phases were further dispersed. The characteristic peaks of the x ray diffraction pattern showed that the crystalline structure was different from a simple mixed polycrystalline, the characteristic peak 003 and the characteristic peak 111 were substantially overlapped, indicating that the crystal lattice structures are in an intergrown state. Referring to Fig. 14 of the drawing, the scanning electron micrograph suggested an existence of different crystal lattice structures instead of a single monocrystalline.

The high manganese polycrystalline material of example 8 was used as an active positive-electrode material to prepare a 053048 square type lithium ion battery, the performance and electric property of the positive-electrode material pole piece was shown in Table 1.

### Example 9

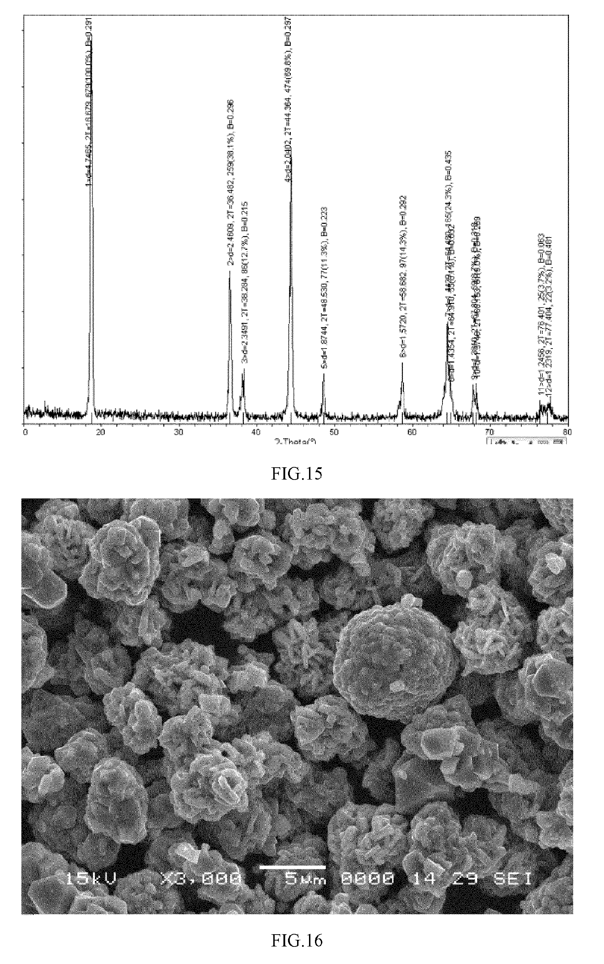

Monocrystalline A, monocrystalline B and monocrystalline D at a mol ratio of Mn to Co plus Ni plus Mn was 80.3:100 were mixed and stirred at a speed of 135rpm for 10min to obtain a mixture, Cr(CH₃COO)₃ containing 0.06mol Cr which was dissolved in 100ml 50 wt % ethanol aqueous solution was then added to the mixture, stirring at a speed of 90 rpm for 50min, drying at 190°C for 3 hours, heating with a heating rate of 85°C/hr until a temperature thereof amounted to 500°C, and activating for 3 hours, so that crystal lattice structures were in an intergrown or mixed state. The crystal lattice structures in an intergrown or mixed state were grinded at a rotating speed of 1600rpm for 3min to yield the high manganese positive-electrode material. Referring to Fig. 15 of the drawing, an x ray diffraction pattern showed that the crystal lattice structures were intergrown LiMn₂ₙNi₂₍₁₋ₙ₎O₄/LICoₙ(NiMn)₁₋ₙO₂/LiNiₙMn₁₋ₙO₂, an ionic radius of Cr³⁺ was 0.0615nm and was substantial equal to an ionic radius of Mn³⁺ which was 0.064nm, so that part of the Li¹⁺ was replaced in a dynamic condition. And thus the Li¹⁺ of the monocrystallines and other crystalline in different phases were further dispersed. The characteristic peaks of the x ray diffraction pattern showed that the crystalline structure was different from a simple mixed polycrystalline, the characteristic peak 003 and the characteristic peak 111 were substantially overlapped, indicating that the crystal lattice structures were in an intergrown state. Referring to Fig. 16 of the drawing, the scanning electron micrograph suggested an existence of different crystal lattice structures instead of a single monocrystalline.

The high manganese polycrystalline material of example 9 was used as an active positive-electrode material to prepare a 053048 square type lithium ion battery, the performance and electric property of the positive-electrode material pole piece was shown in Table 1.

### Example 10

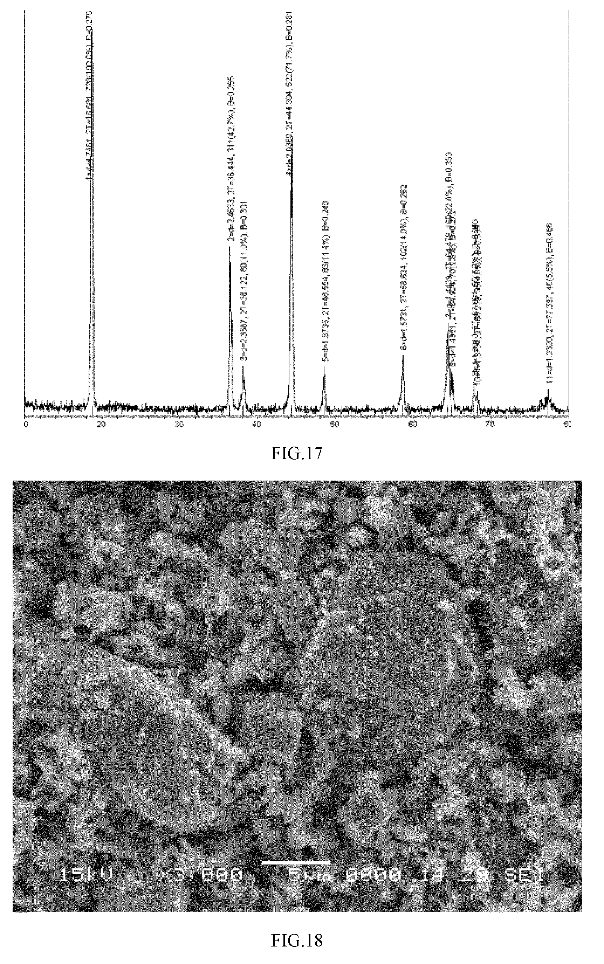

Monocrystalline B and monocrystalline C at a mol ratio of Mn to Co plus Ni plus Mn was 89.2:100 were mixed and stirred at a speed of 140rpm for 20min to obtain a mixture, Zr(NO₃)₄ containing 0.06mol Zr which was dissolved in 100ml 50 wt % ethanol aqueous solution was then added to the mixture, stirring at a speed of 85 rpm for 45min, drying at 150°Cfor 3 hours, heating with a heating rate of 100°C/hr until a temperature thereof amounted to 600°C, and activating for 4 hours, so that crystal lattice structures were in an intergrown or mixed state. The crystal lattice structurescrystal lattice structures in an intergrown or mixed state were grinded at a rotating speed of 1500rpm for 5min to yield the high manganese positive-electrode material. Referring to Fig. 17 of the drawing, an x ray diffraction pattern showed that the crystal lattice structures were intergrown LiCoₙ(NiMn)₁₋ₙO₂/LiMn₂ₙNi₂₍₁₋ₙ₎O₄, an ionic radius of Zr⁴⁺ was 0.072nm and was substantial equal to an ionic radius of Mn³⁺ which was 0.064nm, so that part of the Li¹⁺ was replaced in a dynamic condition. And thus the Li¹⁺ of the monocrystallines and other crystalline in different phases were further dispersed. The characteristic peaks of the x ray diffraction pattern showed that the crystalline structure was different from a simple mixed polycrystalline, the characteristic peak 003 and the characteristic peak 111 were substantially overlapped, indicating that the crystal lattice structures were in an intergrown state. Referring to Fig. 18 of the drawing, the scanning electron micrograph suggested an existence of different crystal lattice structures instead of a single monocrystalline.

The high manganese polycrystalline material of example 10 was used as an active positive-electrode material to prepare a 053048 square type lithium ion battery, the performance and electric property of the positive-electrode material pole piece was shown in Table 1.

Accordingly, in example 1 to example 5, compound of Co, Ni and Mn had used carbonate slat thereof. Hydroxy compound and oxalate slat of Co, Ni and Mn had substantial same physical and chemical property with the carbonate salt. Element Co, Ni, and Mn all belonged to transition elements and had substantial approximate ionic radius which was 0.053 - 0.06nm, and an ion valence was the same which was +2, so that a harmony mixed crystalline structure was formed. And thus a chemical environment for the dispersing of Li⁺ to disperse was provided, making a great a contribution to a formation of a basic crystalline frame for the preparing of the precursor of Li with Co, Ni and Mn. Therefore, hydroxy compound and oxalate slat of Co, Ni and Mn were suitable to be employed in preparing the precursor of Li with Co, Ni and Mn.

Accordingly, in example 6 to example 10, element Al and Mg were taken as examples of the doping element. Element Si, Ti, Fe, and Zr, which were like Al and Mg, had an ionic radius of 0.04 - 0.067nm and was smaller than an ionic radius of Li⁺ which was 0.076nm, and was substantial approximate to the ionic radius of Mn³⁺ which was 0.0645nm, so that Li⁺ could be replaced and formation of the crystal lattice structurescrystal lattice structures was ensured under certain dynamic condition. Adding doping element could inhibit a disproportionation of Mn³⁺ to Mn²⁺ and Mn⁴⁺. Providing at least one doping element could inhibit phase change and balance the electric charge between the different crystalline phases, so that a high temperature durability of the material was enhanced, a self discharge thereof was reduced, and security property such as thermal stability was enhanced.

### Control Example 1

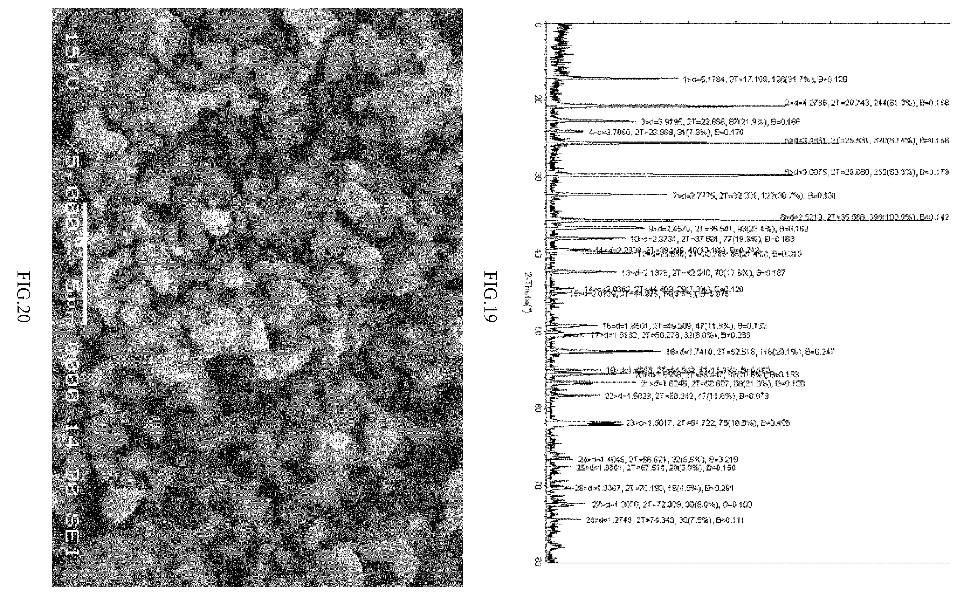

Referring to Fig. 19 of the drawing, the control example 1 was a public sold lithium iron phosphate ZHFe1# positive-electrode material of Shenzhen Zhenhua Chene-Chem Co., Ltd. An x ray diffraction pattern showed that the crystalline structure was a single lithium iron phosphate olivine structure. Referring to Fig. 20 of the drawing, a scanning electron micrograph showed that a particle size of the monocrystalline was smaller than 1µm and the monocrystalline was evenly distributed. This positive-electrode material was also used as an active positive-electrode material to prepare a 053048 square type lithium ion battery, the performance and electric property of the positive-electrode material pole piece was shown in Table 1.

### Control Example 2

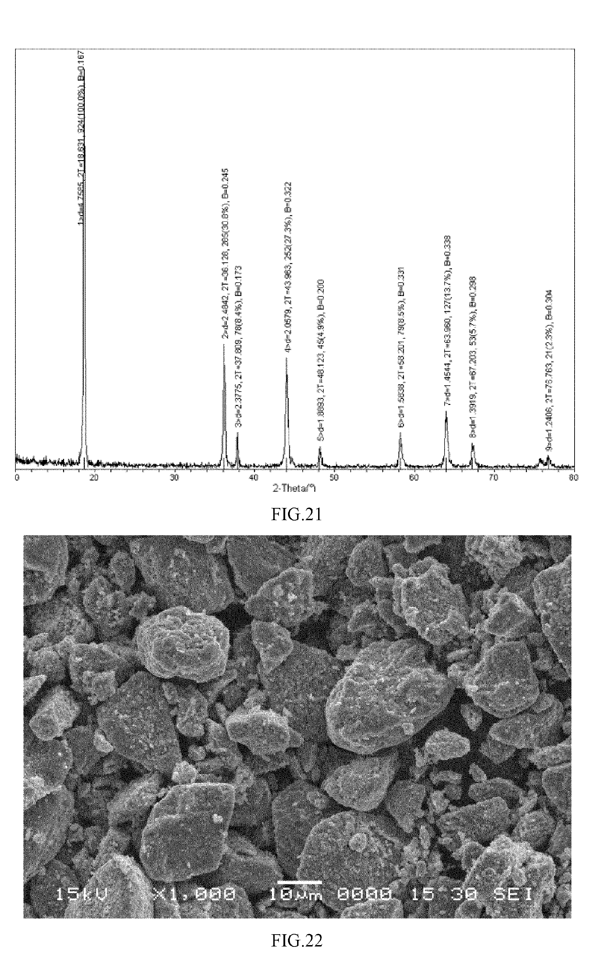

Referring to Fig. 21 of the drawing, the control example 1 was a public sold lithium manganate ZHM01# positive-electrode material of Shenzhen Zhenhua Chene-Chem Co., Ltd. An x ray diffraction pattern showed that the crystalline structure was a single lithium manganate spinel structure. Referring to Fig. 22 of the drawing, a scanning electron micrograph showed that a particle size of the monocrystalline was smaller than 1µm and the monocrystalline was in a reunion state. The specific surface area which was 0.6 - 0.9 m²/g was relatively smaller, This positive-electrode material was also used as an active positive-electrode material to prepare a 053048 square type lithium ion battery, the performance and electric property of the positive-electrode material pole piece was shown in Table 1.

Conclusion: the high manganese polycrystalline material of the present invention had a compact density (3.0 - 3.5g/cm³) lager than a compact density of the lithium manganate (2.9 - 3.3g/cm³) and a compact density of the lithium iron phosphate (2.1 - 2.5g/cm³); a capacity (≥115mAh/g) higher than the a capacity of lithium manganate (95-110mAh/g) and lower than a capacity of the lithium iron phosphate (-130mAh/g. We could make a conclusion that the high manganese polycrystalline material of the present invention had an energy density larger than an energy density of the lithium manganate and the lithium iron phosphate. For the olivine lithium iron phosphate, an electric potential, which was 3.4V ( vs.Li/Li+), was relatively low, a particle size of the monocrystalline was relatively small (≤ 1um), a specific surface area was relatively large (12 - 20cm²/g), a tap density was relatively low(≤ 1.2g/cm3), so that a tap density and an energy density of the pole piece were relatively low. For the spinel lithium mangnate, the ternary Li-Mn-O combination was easy to form various kinds of compound and also could be transformed into each other under different conditions. As a result, the crystalline structure was easy to change its pattern during charging and discharging process, and the capacity was decayed fast. But the high manganese polycrystalline material of the present invention had overcome the disadvantages of the lithium mangnate structure resulting from the existence of mulitelement and polycrystalline. Therefore, the capacity and stability of the high manganese polycrystalline material of the present invention were both higher than lithium manganate. In addition, the safety was substantially the same as lithium mangnate and lithium iron phosphate, the circulation performance at high temperature was substantially the same as lithium iron phosphate but greatly better than lithium mangnate, the circulation performance at normal temperaturewas substantially the same as lithium iron phosphate but better than lithium mangnate. In view of the above, the high manganese polycrystalline material of the present invention had a good performance in regard of the energy density and the safety, so that the high manganese polycrystalline material of the present invention was a perfect choice for the power battery.

Table 1 showed the testing result of example 5-9 and control example 1-2. The type of the battery was 053084. The charging and discharging voltage was 4.2 - 2.75V, and the samples of example 5-9 and control example 1-2 were tested with a charging/discharging rate of 1C.

One skilled in the art will understand that the embodiment of the present invention as shown in the drawings and described above is exemplary only and not intended to be limiting.

**Table 1**

| | Item | | | | | | |
|---|---|---|---|---|---|---|---|
| Positive-electrode material | Compact density of pole piece (g/cm3) | Initial capacity (mAh/g) | Energy density of positive electrode (mAh/c m3) | Capacity retention after 300 cycles at 25°C (100%) | Capacity retention after 1000 cycles at 25°C (100%) | Capacity retention after 500 cycles at 55°C (100%) | Over charge experiment at 10V under rate of 1C |
| Example 6 LiMN₂ₙNi₂₍₁₋ₙ₎O₄/ LiCoₙ(NiMn)₁₋ₙO₂ | 3.2 | 126.2 | 403.84 | 91.4 | 82.4 | 83.0 | Does not burn nor explode |
| Example 7 LiMn₂ₙNi₂₍₁₋ₙ₎ O₄/ LiCoₙ(NiMn)₁₋ₙO₂/LiMn₂ₙNi₂₍₁₋ₙ₎ O₄ | 3.3 | 126.5 | 417.45 | 93.8 | 85.2 | 82.2 | Does not burn nor explode |
| Example 8 LiMn₂ₙNi₂₍₁₋ₙ₎O₄/ LiNiₙMn₁₋ₙO₂ | 3.1 | 117.2 | 363.32 | 92.5 | 83.1 | 86.4 | Does not burn nor explode |
| Example 9 LiMn₂ₙNi₂₍₁₋ₙ₎ O₄/LICOₙ(NiMn)₁₋nO₂/LiNiₙMn₁₋ₙO₂ | 3.2 | 125.0 | 400.00 | 93.8 | 83.3 | 82.3 | Does not burn nor explode |
| Example 10 LiCoₙ(NiMn)₁₋ₙO₂/LiMn₂ₙNi₂₍₁₋ₙ₎ O₄ | 3.0 | 118.2 | 354.60 | 95.1 | 85.3 | 84.8 | Does not burn nor explode |
| Control example 1 LiFePO₄ | 2.4 | 130.8 | 313.92 | 95.7 | 90.2 | 88.7 | Does not burn nor explode |
| Control example 2 LiMn₂O₄ | 3.0 | 104.6 | 313.80 | 90.3 | 73.1 | 65.5 | Does not burn nor explode |

## Claims

1. A method of preparing of a high manganese polycrystalline positive-electrode material, said method comprises the following steps:
1) preparing of a precursor: dispersing of 0.3-1.2 mol Li₂CO₃, LiAc or LiOH in 200-300m12-5 wt % polyethylene glycol hydrophilic colloid solution, stirring at a speed of 10-60rpm for 50-120min to obtain a colloid product, adding compound of Co, Ni and Mn thereto with a mol ratio of Mn to Ni plus Co is 0.4-2.0: 0.01-0.6, stirring at a speed of 50-60rpm for 10-30min, drying at 150-600°C for 2-15 hours, and stirring at a speed 1500-3000rpm for 2-30min to obtain said precursor of crystalline of Li with Co, Ni and Mn;
2) sintering of a monocrystalline: sintering said precursor at 750-1000°C for 4-15 hours, cooling, and cutting a particle size thereof to D50=7-20µm so as to obtain the monocrystalline compound which is selected from the group consisting of LiMn₂O₄, LiCoₙ(NiMn)₁₋ₙO₂, LiNi_{0.8}Co_{0.2}O₂, LiCoO₂, LiNiₙMn₁₋ₙO₂, LiMn₂ₙNi₂₍₁₋ₙ₎O₄ and LiNiO₂, wherein n < 1; and
3) synthesizing of polycrystalline: mixing at least two of said monocrystalline compounds at a mol ratio of Mn to Co plus Ni plus Mn is 60-90:100, stirring at a speed of 100-150rpm for 5-20min to obtain a mixture, wherein 0.01-0.1mol soluble salt of a doping element selected from at least one of the group consisting of Al, Si, Ti, Fe, Zr, Mg and Cr dissolved in 100-300ml 30-60 wt % ethanol aqueous solution is added to said mixture, stirring at a speed of 60-100 rpm for 30-60min, drying at 100-200°C for 2-10 hours, heating with a heating rate of 50-100°C/hr until a temperature thereof amounts to 300-850°C, and activating for 2-10 hours, so that crystal lattice structures are in an intergrown or mixed state.

2. The method as recited in claim 1, wherein said crystal lattice structures in said intergrown state are subjected to a smashing process.

3. The method as recited in claim 2, wherein said crystal lattice structures in the intergrown or mixed state are grinded at a rotating speed of 1500-3000rpm for 2-5min.

4. The method as recited in claim 3, wherein said compound of Co, Ni and Mn is selected from the group consisting of monohydroxy compound, oxalate and carbonate of Co, Ni and Mn

5. The method as recited in claim 4, wherein said precursor is sintered at 750-1000°C for 4-15 hours and then naturally cooled down.

## Patentansprüche

1. Ein Verfahren zur Herstellung eines hoch manganhaltigen polykristallinen Materials für positive Elektroden, dieses Verfahren besteht aus folgenden Schritten:
1) Herstellung eines Vorläufers: Auflösen von 0.3-1.2 Mol Li₂CO₃, LiAc oder LiOH in 200 bis 300ml 2 bis 5 Gewichts% Polyethylenglykol hydrophiler Kolloidlösung, Umrühren mit einer Drehzahl von 10 bis 60 rpm während 50 bis120 Minuten, um ein Kolloidprodukt zu erhalten, Hinzufügen einer Verbindung von Co, Ni und Mn mit einem Molverhältnis von Mn zu Ni plus Co von 0.4-2.0 : 0.01-0.6, Umrühren mit einer Drehzahl von 50 bis 60 rpm während 10 bis 30 Minuten, Trocknen bei 150 bis 600°C für 2 bis 15 Stunden, und Umrühren mit einer Drehzahl von 1500 bis 3000 rpm für 2 bis 30 Minuten, um den genannten kristallinen Vorläufer aus Li mit Co, Ni und Mn zu bekommen;
2) Sintern eines Monokristallins: Sintern des genannten Vorläufers bei 750 bis 1000°C für 4 bis 15 Stunden, Abkühlen, eine Partikelgrösse davon Abschneiden von D50=7 bis 20 µm, um die monokristalline Verbindung zu bekommen, die aus einer Gruppe ausgewählt wird, die aus LiMn₂O₄, LiCoₙ(NiMn)₁₋ₙO₂, Lini_{0.8}Co_{0.2}O2, LiCoO₂, LiNiₙMn₁₋ₙO₂, LiMn₂ₙNi₂₍₁₋ₙ₎O₄ und LiNiO₂ besteht, wobei n<1; und
3) Synthetisieren eines Polykristallins: Mischen von mindestens zwei der genannten monokristallinen Verbindungen in einem Molverhältnis von Mn zu Co plus Ni plus Mn von 60-90:100, Rühren mit einer Drehzahl von 100 bis 150 rpm für 5 bis 20 Minuten, um ein Gemisch zu bekommen, wobei 0.01 bis 0.1 Mol lösliches Salz eines Fremdkörperspurenelements zu dem Gemisch hinzugefügt wird, wobei das Fremdkörperspurenelement aus zumindest einem aus der Gruppe von Al, Si, Ti, Fe, Zr, Mg und Cr ausgewählt ist, das in einer wässrigen ethanolischen Lösung von 100 bis 300ml 30 bis 60 Gewichts% aufgelöst wird, Rühren mit einer Drehzahl von 60 bis 100 rpm für 30 bis 60 Minuten, Trocknen bei 100 bis 200°C für 2 bis 10 Stunden, Erhitzen mit einer Rate von 50 bis 100°C pro Stunde bis die Temperatur von 300 bis 850°C erreicht ist, und Aktivieren für 2 bis 10 Stunden, damit die kristallinen Gitterstrukturen in einem verwachsenen oder gemischten Zustand sind.

2. Die Methode wie in Anspruch 1 angeführt, bei der die genannten kristallinen Gitterstrukturen in genanntem verwachsenen Zustand einem Zerschlagungsprozess unterworfen werden.

3. Die Methode wie in Anspruch 2 angeführt, bei der die genannten kristallinen Gitterstrukturen in einem verwachsenen oder gemischtem Zustand für 2 bis 5 Minuten bei einer Drehzahl von 1500 bis 3000 rpm gemahlen werden.

4. Die Methode wie in Anspruch 3 angeführt, bei der die Verbindung von Co, Ni und Mn aus einer Gruppe ausgewählt wird die aus einer Monohydroxy-Verbindung, Oxalat und Karbonat von Co, Ni und Mn besteht.

5. Die Methode wie in Anspruch 4 angeführt, bei der genannte Vorläufer gesintert wird bei 750-1000°C für 4 bis 15 Stunden und danach natürlich abkühlt.

## Revendications

1. Procédé de préparation d'un matériau polycristallin à électrode positive et à manganèse élevé, ledit procédé comprend les étapes suivantes:
1) la préparation d'un précurseur : dispersion de 0,3 à 1,2 mol Li₂CO₃, LiAc ou LiOH dans une solution de 200-300 ml 5.2% en poids de polyéthylène glycol de colloïde hydrophile, à une vitesse d'agitation de 10-60rpm pendant 50-120min pour obtenir un produit de colloïde , l'addition d'un composé de Co, Ni et Mn à celui-ci avec un rapport molaire de Mn à Ni plus Co est de 0,4 à 2,0: de 0,01 à 0,6, à une vitesse d'agitation de 50-60rpm pendant 10-30min, séchage à 150-600 °C pendant 2 -15 heures, et à une vitesse d'agitation de 1500-3000rpm pendant 2-30min pour obtenir ledit précurseur de cristallin de Li avec Co, Ni et Mn;
2) le frittage d'un monocristallin: fritter ledit précurseur à 750-1000 °C pendant 4-15 heures, refroidir, et couper une taille de particules de celui-ci à D50 = 7-20µm de façon à obtenir le composé monocristallin qui est choisi dans le groupe constitué de LiMn₂O₄, LiCOₙ (NiMn)₁₋ₙO₂, LiNi_{0.8} Co_{0.2}O₂, LiCoO₂, LiNiₙMn₁₋ₙO₂, LiMn₂ₙNi₂₍₁₋ₙ₎O₄ et LiNiO₂, où n<1, et
3) la synthèse du polycristallin: le mélange d'au moins deux desdits composés monocristallins à un rapport molaire de Mn à Ni Co II est Mn, plus de 60 à 90 100, à une vitesse d'agitation de 100-150rpm pendant 5-20min pour obtenir un mélange, 0.01 - 0.1 mol dans lequel le sel soluble d'un élément dopant choisi parmi au moins l'un du groupe constitué de Al, Si, Ti, Fe, Zr, Mg et Cr dissous dans une solution aqueuse de 100-300ml 30 à 60% en poids d'éthanol, est ajouté au dit mélange, à une vitesse d'agitation de 60 à 100 rpm pendant 30-60min, sécher à 100-200 °C pendant 2-10 heures, avec un taux de chauffage de 50 à 100 °C / h jusqu'à ce que le chauffage de celui-ci s'élève à une température de 300 à 850 °C, et activer pendant 2-10 heures, de sorte que les structures du réseau cristallin soient dans un état entremêlée ou mixte.

2. Procédé selon la Déclaration 1, dans lequel lesdites structures de réseau cristallin dans ledit état entremêlé sont soumises à un processus de destruction.

3. Procédé selon la Déclaration 2, dans lequel lesdites structures du réseau cristallin à l'état non mélangé ou entremêlé sont broyées à une vitesse de rotation de 1500-3000rpm pendant 2-5min.

4. Procédé selon la Déclaration 3, dans lequel ledit composé de Co, Ni et Mn est choisi dans le groupe constitué par le composé monohydroxylé, d'oxalate et de carbonate de Co, Ni et Mn.

5. Le procédé selon la Déclaration 4, dans lequel ledit précurseur est fritté à 750-1000 °C pendant 4-15 heures, puis refroidi naturellement.
